# EUROPÄISCHE PATENTSCHRIFT

(11) **EP 1 051 866 B1**
(45) Veröffentlichungstag und Bekanntmachung des Hinweises auf die Patenterteilung: **19.01.2011**
(21) Anmeldenummer: 99907310.9
(22) Anmeldetag: 03.02.1999
(51) Int. Cl.: H04Q 3/00, H04Q 3/66, H04Q 3/62, H04M 3/42

(54) **VERFAHREN ZUR KOSTENGÜNSTIGEN VERMITTLUNG VON TELEKOMMUNIKATIONSVERBINDUNGEN INNERHALB ÖFFENTLICHER TELEKOMMUNIKATIONSNETZE**
PROCESS FOR ECONOMICALLY SWITCHING TELECOMMUNICATION CONNECTIONS WITHIN PUBLIC TELECOMMUNICATION NETWORKS
PROCEDE DE COMMUTATION ECONOMIQUE DE COMMUNICATIONS TELEPHONIQUES DANS DES RESEAUX PUBLICS DE TELECOMMUNICATION

(30) Priorität: 03.02.1998 DE 19804056
(43) Veröffentlichungstag der Anmeldung: 15.11.2000
(73) Patentinhaber: T-Mobile Deutschland GmbH, 53227 Bonn (DE)
(72) Erfinder: DENNERT, Thomas, D-53844 Troisdorf (DE); MICHEL, Uwe, D-53604 Bad Honnef (DE)
(74) Vertreter: Riebling, Peter
(86) Internationale Anmeldenummer: PCT/DE1999/000295
(87) Internationale Veröffentlichungsnummer: WO 1999/040730

(56) Entgegenhaltungen:
- EP-A- 0 608 066
- EP-A- 0 751 662
- WO-A-97/05749
- WO-A-97/31493
- US-A- 4 791 665
- SCHREYER O ET AL: "Least Cost Call Routing - A Brilliant Application for Private IN" PROCEEDINGS OF THE IEEE INTELLIGENT NETWORK WORKSHOP, 'FREEDOM AND FLEXIBILITY: REALISING THE PROMISE OF INTELLIGENT NETWORK SERVICES IN THE 90'S AND BEYOND', XP002104333 MELBOURNE, VIC., AUSTRALIA, 21-24 APRIL 1996

## Beschreibung

Die Erfindung betrifft ein Verfahren zur kostengünstigen Vermittlung von Telekommunikationsverbindungen innerhalb öffentlicher Telekommunikationsnetze nach dem Oberbegriff des Patentanspruchs 1.

Um Kosten für Telekommunikation einzusparen, ist es in privaten Firmennetzen üblich eine physikalische Vernetzung mittels gemieteten Standleitungen (leased lines) zwischen den Vermittlungsknoten des privaten Netzes oder eine virtuelle Vernetzung mittels sogenannter "Virtual Privat Networks" (VPN) einzusetzen. Darüber hinaus sorgen auch Server innerhalb der privaten Netze dafür, daß für Verbindungen über beliebige öffentliche Netze zu nationalen oder internationalen Zielen, der jeweils günstigste Netzübergang zum jeweils günstigsten Netz für jedes aufgebaute Gespräch gewählt wird (Least Cost Routing). Dies geschieht transparent für den Teilnehmer der Telefonverbindung, d.h. er wählt die übliche öffentliche Rufnummer, sein Firmennetz setzt gegebenenfalls Präfixe vor die Wahlinformation, um eine kostengünstige Vermittlung zu ermöglichen.

Auch private Kunden mit einzelnen Telekommunikationsendgeräten die direkt an ein öffentliches Netz angeschlossen sind, haben die Möglichkeit für ihre Verbindungen geeignete Zwischennetzanbieter auszuwählen, um die anfallenden Verbindungsgebühren zu senken. Dies geschieht seit Anfang 1998 in Deutschland z.B. durch Vorwahl einer 5-stelligen Netzvorwahl. Diese kann bei jedem Anruf (Call-by-Call) oder per Vorauswahl (Preselection) durch den Teilnehmer eingestellt werden. Um optimal Kosten zu sparen, muß der Teilnehmer für jedes einzelne Gespräch anhand zahlreicher Kriterien (Uhrzeit, Wochentag, Ziel, geplante Gesprächsdauer) entscheiden, welche Netzvorwahl er anwählen will, d.h. welcher angebotene Tarif für Ihn der günstigste ist. Somit gestaltet sich der Wahlvorgang komplex, ein kostenoptimales Ergebnis ist schwer zu erzielen, da die fortwährende Auswahl des günstigsten Anbieters zeitaufwendig ist, und die nötigen Informationen über Gesprächstarife etc. in der Regel dem privaten Teilnehmer nicht alle aktuell vorliegen.

Die EP-A-0 751 662 offenbart ein Verfahren zur Gebühreninformation und kostengünstigen Vermittlung von Telekommunikationsverbindungen innerhalb öffentlicher Telekommunikationsnetze, bei dem vom Teilnehmer ein gewünschter Verbindungswunsch über ein Endgerät an das Telekommunikationsnetz signalisiert wird. In einer Einrichtung des Telekommunikationsnetzes werden aus dem Verbindungswunsch Tarifierungsdaten über die zu erwartenden Kosten des Verbindungswunsches ermittelt und an das Endgerät des Teilnehmers gesendet. Es kann ferner der günstigste von mehreren möglichen Verbindungswegen ermittelt und dem Teilnehmer mitgeteilt werden. Daraufhin kann ein automatischer oder teilnehmergesteuerter Verbindungsaufbau über den günstigsten Verbindungsweg erfolgen.

Die WO-A-97/31493 betrifft ein Verfahren zur Rufumleitung, bei dem ein Ruf von einem Ursprungsknoten zu einem Zielknoten vermittelt wird, wobei anhand der Verfahrens selbständig die bestmöglichen Verbindungsknoten zwischen dem Ursprungs- und dem Zielknoten ermittelt werden. Hierbei wird als Kriterium für die optimale Verbindung eine bestmögliche Ressourcenauslastung bzw. Ressourcenschonung des Telekommunikationsnetzes herangezogen. Es geht hier um die Vermeidung von unnötigen Kosten für den Betreiber des Kommunikationsnetzes, indem für den Aufbau einer Verbindungen so wenig Vermittlungsstellen wie möglich belastet werden.

Die Aufgabe der Erfindung besteht darin, ein Verfahren zur kostengünstigen Vermittlung von Telekommunikationsverbindungen innerhalb öffentlicher Telekommunikationsnetze vorzuschlagen, das es erlaubt, durch eine intelligente Steuerung in öffentlichen Telekommunikationsnetzen dem privaten Teilnehmer von Telekommunikationsdienstleistungen immer die für ihn kostenmäßig günstigste Verbindung aufzubauen.

Diese Aufgabe wird durch die kennzeichnenden Merkmale des Patentanspruchs 1 gelöst.

Vorteilhafte Weiterbildungen und Ausgestaltungen der Erfindung sind Gegenstand der abhängigen Patentansprüche.

Das Verfahren ermöglicht Teilnehmern öffentlicher Netze einen kostenoptimale Nutzung dieser Netze, ohne dem Teilnehmer zusätzliche Prozeduren, wie z.B. Vorwahl eines geeigneten Netzanbieters oder Kenntnis der Tarifstrukturen, abzuverlangen.

Die Abfrage der Wegesteuerungsservers aufgrund des Teilnehmerdatum erfolgt auch, wenn der Teilnehmer ein Gespräch nicht direkt aufbaut, sondern das Gespräch aufgrund einer vom Teilnehmer im Netz aktivierten Rufumleitung zustandekommt. An einer solchen Rufumleitung (CalL Forwarding gemäß ISDN Standard oder als Leistungsmerkmal für den analogen Telefondienst), die dem Umleitenden in Rechnung gestellt wird, ist das Telekommunikationsendgerät des Teilnehmer nicht direkt beteiligt, d.h. ein Ersatz für das hier geschilderte Verfahren in Form einer Erweiterung der lokalen Endgerätefunktionalität würde an dieser Stelle keinen Erfolg zeitigen. Ebenso kann in einem solchen Fall der Teilnehmer nicht manuell per Call-by-Call Verfahren den günstigsten Weg zum Ziel aussuchen.

In der öffentlichen Vermittlung des Teilnehmers wird hierfür eine Kennzeichnung innerhalb seiner Teilnehmerdaten vorgenommen. Diese bewirkt, das bei jedem Verbindungsaufbau durch den Teilnehmer ein Wegesteuerungspunkt, z.B. realisiert durch einen Wegesteuerungsserver (Public Least Cost Routing Server) im öffentlichen Netz abgefragt wird. Alternativ dazu kann der Wegesteuerungsserver auch mittels der Wahl einer oder mehrerer dedizierter Rufnummern abgefragt werden.

Der Wegesteuerungsserver verfügt über eine Steuerlogik, welche die von der Ursprungsvermittlung übermittelten Abfragedaten verknüpft mit umfangreichen Datenbeständen über das Telefonieverhalten des Teilnehmers (Dauer der Gespräche, Nutzungshäufigkeit verschiedener Transitnetze und Datenbeständen über die Tarifstrukturen der zur Verfügung stehenden Transitnetze (Abhängigkeiten von Ursprung, Ziel, Uhrzeit, Wochentag, Feiertagskalender, Verbindungsdauer). Danach kann der Wegesteuerungsserver die Ursprunqsvermittlung anweisen, über das ermittelte günstigste Transitnetz die Verbindung zum gewünschten Teilnehmer aufzubauen.

Die Abfrage des Wegesteuerungsservers kann z.B. unter Nutzung des INAP (Intelligent Network Application Part; etablierter ITU/ETSI Standard) erfolgen, wobei der Server selbst in einem Dienstesteuerungspunkt des Intelligenten öffentlichen Netzes (IN-SCP) realisiert werden kann.

Folgende Vorteile werden durch die Erfindung erzielt.
- ohne Veranderungen oder zusätzliche Installationen auf der Seite des privaten Teilnehmer öffentlicher Telekommunikationsnetze wird durch Erweiterung der Infrastruktur des öffentlichen Netzes durch Einsatz des Wegesteuerungsservers eine Möglichkeit geschaffen alle kostenpflichtigen Kommunikationsbeziehungen des Teilnehmer zum günstigsten Tarif zu vermitteln
- Nutzung des Verfahren durch Eintrag der Subskription für die Dienstleistung in der Vermittlung des Teilnehmers, wodurch automatisierte Nutzung möglich wird oder alternativ hierzu die Nutzung des Verfahrens durch die dedizierte Wahl einer oder mehrerer Rufnummern.
- Verknüpfung von Informationen des Teilnehmer (rufender Teilnehmer, gewählte Rufnummer) mit Teilnehmerdaten (Telefonieverhalten) und Daten über Netztopologie und Anbietertarifen, die im Wegesteuerungsserver gespeichert sind
- Nutzung des Verfahren auch für umgeleitete Verbindungen

Nachfolgend wird die Erfindung anhand von Zeichnungen an einem Ausführungsbeispiel naher erläutert. Es zeigt:
- Figur 1:: schematisch die Verknüpfung und das Zusammenwirken der möglichen Telekommunikationsnetze und die Anbindung des Servers für die Wegesteuerung (Routing-Server);
- Figur 2:: schematisch die Struktur und die Abläufe im Wegesteuerungsserver.

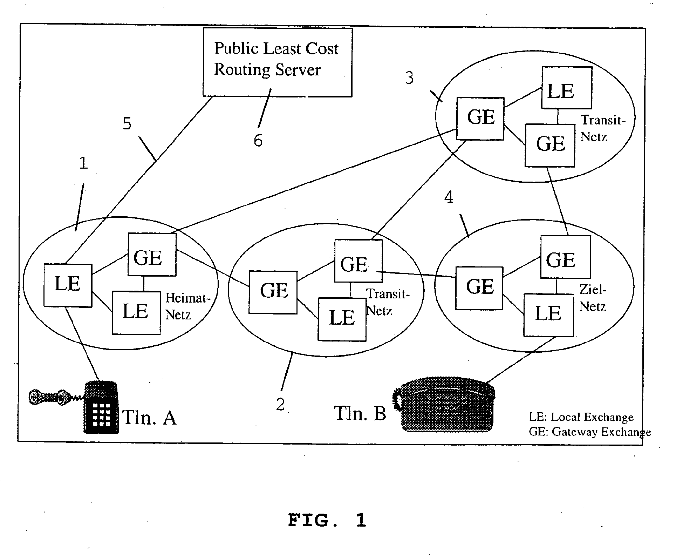

Figur 1 zeigt die Anbindung eines Teilnehmers A an sein öffentliches Heimatnetz 1 (Ursprungsnetz) über seine zugeordnete lokale Vermittlungsstelle LE. Teilnehmer A möchte eine Telekommunikationsverbindung zu einem Teilnehmer B herstellen, der wiederum Teilnehmer eines öffentlichen oder privaten Zielnetzes 4 ist und über seine lokale Vermittlungsstelle LE mit diesem Netz 4 verbunden ist. Es ist möglich, daß es sich bei dem Heimatnetz 1 (Ursprungsnetz) und dem Zielnetz 4 um ein und dasselbe Telekommunikationsnetz handelt.

Die Verbindung zwischen dem Heimatnetz 1 und dem Zielnetz 4 wird über eines oder mehrere Transithetze 2, 3 hergestellt, wobei die Netzübergänge zwischen dem Heimatnetz 1, den Transitnetzen 2,3 und dem Zielnetz 4 durch netzübergreifende Vermittlungsstellen GE gebildet sind.

Eine oder mehrere der Vermittlungsstellen LE, GE des Heimatnetzes 1 haben z.B. über eine INAP-Schnittstelle 5 Zugang zu einem Wegesteuerungsserver 6, welcher z.B. in einem Dienstesteuerungspunkt (SCP) des Heimatnetzes 1 eingerichtet sein kann, wobei dabei vorausgesetzt wird, daß es sich beim Netz 1 um ein sogenanntes Intelligentes Netz handelt.

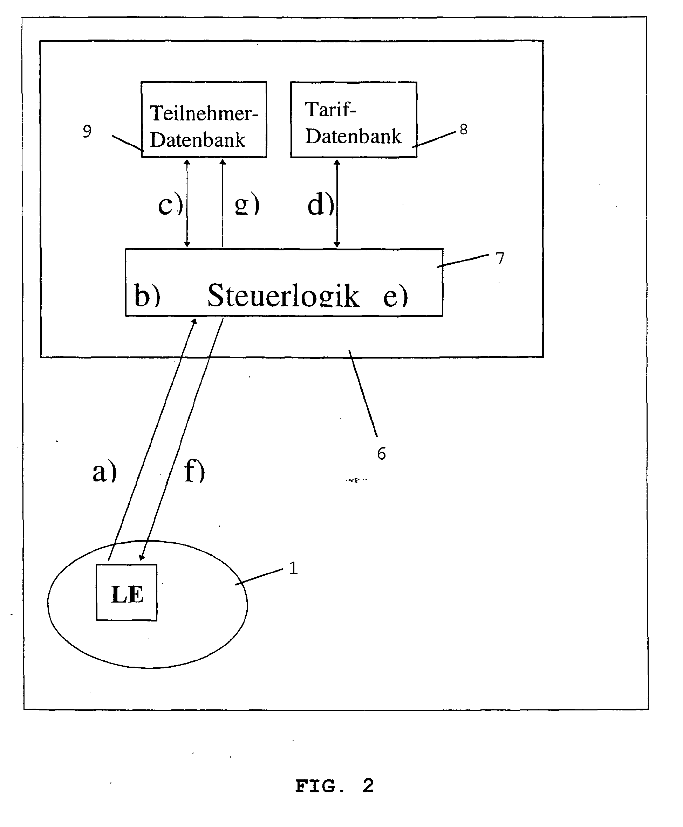

Gemäß Figur 2 beinhaltet der Wegesteuerungsserver 6 eine Teilnehmerdatenbank 9 mit umfangreichen Datenbeständen über das Telefonieverhalten der Teilnehmer des Netzes 1, z.B. über Dauer der geführten Gespräche, Nutzungshäufigkeit verschiedener Transitnetze. Ferner enthält der Server 6 eine Tarifdatenbank 8 mit Datenbeständen über die Tarifstrukturen der zur Verfügung stehenden Transitnetze, wobei die Abhängigkeiten der Tarife von Ursprung, Ziel, Uhrzeit, Wochentag, Feiertagskalender, Verbindungsdauer ebenfalls in der Datenbank enthalten sind. Die Aktionen des Servers 6 und die Kommunikation mit dem Telekommunikationsnetz 1 werden von einer Steuerlogik 7 gesteuert.

Auf Anforderung des Teilnehmers A wird eine Kennzeichnung innerhalb seiner Teilnehmerdaten vorgenommen, d.h. die Dienstleistung der kostengünstigsten Vermittlung für den Teilnehmer A eingerichtet. Diese bewirkt, das bei jedem Verbindungsaufbau durch z.B. den Teilnehmer A der Wegesteuerungsserver 6 im öffentlichen Netz 1 durch die lokale Vermittlungsstelle LE (Ursprungsvermittlung) abgefragt wird.

In Figur 2 ist weiters der Ablauf einer Abfrage des Wegesteuerungsservers 6 dargestellt.
a) Zunächst erfolgt die Abfrage des Wegesteuerungsserver 6 durch die Ursprungsvermittlung LE des Heimatnetzes 1,
b)die Steuerlogik 7 analysiert die zunächst durch den gewünschten Verbindungsaufbau zur Verfügung gestellten Verbindungsdaten (Ursprung, Zielrufnummer, rufender Teilnehmer, Zusatzdienste wie z.B. Rufumleitung)
c) darauf analysiert die Steuerungslogik 7 die Daten des rufenden Teilnehmers A und dessen Teilnehmerprofil, das in der Teilnehmerdatenbank 9 angelegt ist
d)die Steuerlogik 7 analysiert darauf die verschiedenen in der Tarifdatenbank 8 abgespeicherten Tarife unter Berücksichtigung der für den Teilnehmer zur Verfügung stehenden Transitnetze 2,3 zum Aufbau der gewünschten Verbindung. Die durch den Wegesteuerungsserver 6 genutzte Tarifdatenbank 8 kann tagesaktuell alle relevanten Informationen über nationale und internationale Netzkonfigurationen sowie die Tarifstrukturen der in Frage kommenden Netze 2,3 bereitstellen.
e)die Steuerlogik 7 ermittelt anhand der von der Ursprungsvermittlung LE gelieferten Verbindungsdaten, der Teilnehmerdaten und der Tarifdaten den günstigsten Transitnetzbetreiber und ermittelt daraus eine neue Zielrufnummer, die die Vorwahl des/der ermittelten Transitnetze(s) 2,3 enthält
f)die Steuerlogik 7 weist die Ursprungsvermittlung LE an, mit der neuen Zielrufnummer über das/die Transitnetz(e) 2,3 die Verbindung zum Zielnetz 4 und dem Teilnehmer B aufzubauen. Die Steuerlogik weist ferner die Ursprungsvermittlung an, dem rufenden Teilnehmer eine der ausgewählten Verbindung entsprechende Gebühreninformation (GSM/ISDN Advice of Charge, Gebührenimpuls) zu übermitteln.
g)Abschließend erfolgt eine Aktualisierung der Teilnehmerdatenbank 9 um das Telefonieverhalten des Teilnehmers A zu protokollieren, wobei anhand dieser Daten z.B. die Nutzung von Rabatten für Vielnutzung etc. eingerichtet werden können.

## Patentansprüche

1. Verfahren zur kostengünstigen Vermittlung von Telekommunikationsverbindungen innerhalb öffentlicher Telekommunikationsnetze, bei dem ein Aufbau einer Telekommunikationsverbindung zwischen einem Teilnehmer A eines Ursprungsnetzes (1) und einem Teilnehmer B eines Zielnetzes (4) über mindestens ein Transitnetz (2 ;3) erfolgt;
wobei ein Wegesteuerungspunkt (6) mit einer Teilnehmerdatenbank (9) und einer Tarifdatenbank (8) eingerichtet wird, in welchen Teilnehmerdaten sowie die für den Teilnehmer A zur Verfügung stehenden Transitnetze und deren Tarifstrukturen abgespeichert sind, wobei die Teilnehmerdatenbank (9) umfangreiche Datenbestände über das Telefonieverhalten der Teilnehmer, wie Dauer der Gespräche, Nutzungshäufigkeit verschiedener Transitnetze enthält;
daß beim Verbindungsaufbau eine Abfrage des Wegesteuerungspunkts (6) durch eine Ursprungsvermittlung LE des Ursprungsnetzes (1) erfolgt, wobei die Abfrage aufgrund der Teilnehmerdaten auch dann erfolgt, wenn der Teilnehmer A eine Verbindung nicht direkt aufbaut, sondern diese aufgrund einer vom Teilnehmer A im Telekommunikationsnetz (1) aktivierten Rufumleitung zustande kommt,
daß eine Steuerlogik (7) im Wegesteuerungspunkt (6) die durch den gewünschten Verbindungsaufbau zur Verfügung gestellten Verbindungsdaten, welche die Ursprungs- und Zielrufnummer enthalten, sowie die Teilnehmerdaten des rufenden Teilnehmers A analysiert,
daß die Steuerlogik (7) die verschiedenen für den Teilnehmer A zur Verfügung stehenden Transitnetze und deren Tarifstrukturen analysiert und anhand der von der Ursprungsvermittlung LE gelieferten Verbindungsdaten , der Teilnehmerdaten und Tarifdaten das/die für den rufenden Teilnehmer A in bezug auf die Tarife günstigste(n) Transitnetz(e) (2; 3) ermittelt; und
daß die Steuerlogik (7) die Ursprungsvermittlung LE anweist anhand der Auswahl des in bezug auf die Tarife günstigsten Transitnetze (2; 3) eine Verbindung über das/die ausgewählte(n) Transitnetz(e) (2; 3) zum gerufenen Teilnehmer B des Zielnetzes (4) aufzubauen, wobei an den rufenden Teilnehmer A eine der ausgewählten Verbindung entsprechende Gebühreninformation übermittelt wird.

2. Verfahren nach Anspruch 1, **dadurch gekennzeichnet, daß** der Wegesteuerungspunkt (6) als Wegesteuerungsserver realisiert ist.

3. Verfahren nach einem der Ansprüche 1 oder 2, **dadurch gekennzeichnet, daß** in der lokalen Vermittlungsstelle LE des rufenden Teilnehmers A eine Kennzeichnung innerhalb seiner Teilnehmerdaten vorgenommen wird, die bei jedem Verbindungsaufbau eine Abfrage des Wegesteuerungspunktes (6) bewirkt.

4. Verfahren nach einem der Ansprüche 1 bis 3, **dadurch gekennzeichnet, daß** eine Abfrage des Wegesteuerungspunktes (6) mittels der Wahl einer oder mehreren dedizierter Rufnummern durch den Teilnehmer A selbst erfolgt.

5. Verfahren nach einem der Ansprüche 1 bis 4, **dadurch gekennzeichnet, daß** der Wegesteuerungspunkt (6) durch einen Dienstesteuerungspunkt SCP eines Intelligenten Netzes IN realisiert ist und unter Nutzung des INAP-Protokolls (5) an das Netz angebunden ist.

6. Verfahren nach einem der Ansprüche 1 bis 5, **dadurch gekennzeichnet, daß** die Tarifdatenbank (8) Tarifstrukturen der zur Verfügung stehenden Transitnetze (2; 3) , in Abhängigkeit von Ursprung, Ziel, Uhrzeit, Wochentag, Feiertagskalender, Verbindungsdauer enthält.

7. Verfahren nach einem der Ansprüche 1 bis 6, **dadurch gekennzeichnet, daß** die Gebühreninformation in Form eines GSM/ISDN AoC oder eines analogen Gebührenimpulses an den Teilnehmer A übermittelt wird.

## Claims

1. Method for cost-effective switching of telecommunications connections within public telecommunications networks, in which a set-up of a telecommunications connection between a subscriber A of a source network (1) and a subscriber B of a destination network (4) is effected via at least one transit network (2; 3); wherein a path control point (6) is equipped with a subscriber database (9) and a tariff database (8), in which subscriber data as well as the transit networks which are available for subscriber A and the tariff structures thereof are stored, wherein the subscriber database (9) contains extensive data stocks about the telephony behaviour of the subscribers, such as duration of the conversations, frequency of use of various transit networks; in that during connection set-up, an interrogation of the path control point (6) is effected by source switching LE of the source network (1), wherein the interrogation on the basis of the subscriber data is also effected when subscriber A does not set up a connection directly, but the latter is achieved on the basis of call forwarding activated by subscriber A in the telecommunications network (1), in that control logic (7) in the path control point (6) analyses the connection data made available by the required connection set up and which contain the source and destination call number, as well as the subscriber data of the calling subscriber A, in that the control logic (7) analyses the various transit networks which are available for subscriber A and the tariff structures thereof and using the connection data delivered by the source switching LE, the subscriber data and tariff data, determines the transit network(s) (2; 3) which are most favourable for the calling subscriber A with regard to the tariffs; and in that the control logic (7) instructs the source switching LE using the selection of the transit networks (2; 3) which are most favourable with regard to the tariffs to set up a connection via the selected transit networks(s) (2; 3) to the called subscriber B of the destination network (4), wherein call-charge information corresponding to the selected connection is transferred to the calling subscriber A.

2. Method according to claim 1, **characterised in that** the path control point (6) is realised as a path control server.

3. Method according to one of claims 1 or 2, **characterised in that** in the local exchange LE of the calling subscriber A, an identification is carried out within his subscriber data which during each connection set-up effects an interrogation of the path control point (6).

4. Method according to one of claims 1 to 3, **characterised in that** an interrogation of the path control point (6) is effected by means of the dialling of one or more dedicated call numbers by subscriber A himself.

5. Method according to one of claims 1 to 4, **characterised in that** the path control point (6) is realised by a service control point SCP of an intelligent network IN and is connected to the network using the INAP protocol (5).

6. Method according to one of claims 1 to 5, **characterised in that** the tariff database (8) contains tariff structures of the available transit networks (2; 3) depending on source, destination, time of day, day of the week, holiday calendar, connection time.

7. Method according to one of claims 1 to 6, **characterised in that** the call-charge information is transferred to subscriber A in the form of a GSM/ISDN AoC or an analog call-charge pulse.

## Revendications

1. Procédé pour la commutation économique de liaisons de télécommunication à l'intérieur de réseaux publics de télécommunication, selon lequel l'établissement d'une liaison de télécommunication entre un abonné A d'un réseau d'origine (1) et un abonné B d'un réseau de destination (4) se fait par l'intermédiaire d'au moins un réseau de transit (2 ; 3) ;
étant précisé qu'un point d'acheminement (6) avec une banque de données d'abonnés (9) et une banque de données de tarifs (8) est installé, dans lequel sont stockés des données d'abonnés ainsi que les réseaux de transit disponibles pour l'abonné A et les structures tarifaires de ces réseaux de transit, la banque de données d'abonnés (9) contenant d'importantes quantités de données sur le comportement téléphonique des abonnés, telles que la durée des conversations, la fréquence d'utilisation de différents réseaux de transit ;
que lors de l'établissement d'une liaison, une interrogation du point d'acheminement (6) a lieu grâce à une commutation d'origine LE du réseau d'origine (1), l'interrogation se faisant sur la base des données d'abonnés même lorsque l'abonné A n'établit pas de liaison directement, mais que cette liaison se fait sur la base d'un transfert d'appel activé par l'abonné A dans le réseau de télécommunication (1),
qu'une logique de commande (7) prévue dans le point d'acheminement (6) analyse les données de liaison fournies grâce à l'établissement de liaison souhaité, qui contiennent le numéro d'appel d'origine et le numéro d'appel de destination, ainsi que les données d'abonnés de l'abonné appelant A,
que la logique de commande (7) analyse les différents réseaux de transit disponibles pour l'abonné A et les structures tarifaires de ces réseaux de transit, et détermine, à partir des données de liaison fournies par la commutation d'origine LE, des données d'abonnés et des données tarifaires, le ou les réseaux de transit (2 ; 3) les plus avantageux en matière de tarifs pour l'abonné appelant A ; et
que la logique de commande (7) donne l'ordre à la commutation d'origine LE, à l'aide de la sélection du réseau de transit (2 ; 3) le plus avantageux en matière de tarifs, d'établir une liaison avec l'abonné appelé B du réseau de destination (4) par l'intermédiaire du ou des réseaux de transit (2 ; 3) sélectionnés, étant précisé qu'une information de taxation correspondant à la liaison sélectionnée est transmise à l'abonné appelant A.

2. Procédé selon la revendication 1, **caractérisé en ce que** le point d'acheminement (6) est réalisé sous la forme d'un serveur d'acheminement.

3. Procédé selon l'une des revendications 1 ou 2, **caractérisé en ce que** dans le centre de commutation local LE de l'abonné appelant A est réalisée, à l'intérieur des données d'abonné de celui-ci, une identification qui provoque à chaque établissement de liaison une interrogation du point d'acheminement (6).

4. Procédé selon l'une des revendications 1 à 3, **caractérisé en ce que** l'interrogation du point d'acheminement (6) se fait à l'aide de la composition, par l'abonné A lui-même, d'un ou plusieurs numéros d'appel spéciaux.

5. Procédé selon l'une des revendications 1 à 4, **caractérisé en ce que** le point d'acheminement (6) est réalisé grâce à un point de commande de services SCP d'un réseau intelligent IN et est relié au réseau à l'aide du protocole INAP (5).

6. Procédé selon l'une des revendications 1 à 5, **caractérisé en ce que** la banque de données tarifaires (8) contient des structures tarifaires des réseaux de transit (2 ; 3) disponibles, en fonction de l'origine, de la destination, de l'heure, du jour de la semaine, du calendrier des jours fériés, de la durée de la liaison.

7. Procédé selon l'une des revendications 1 à 6, **caractérisé en ce que** l'information de taxation est transmise à l'abonné A sous la forme d'une notification de taxation GSM/ISDN AoC ou d'une impulsion de taxation analogique.
